# EUROPÄISCHE PATENTANMELDUNG

(11) **EP 4 757 428 A1**
(43) Veröffentlichungstag der Anmeldung: **10.06.2026**
(21) Anmeldenummer: 24218506.4
(22) Anmeldetag: 09.12.2024
(51) Int. Cl.: H04W 48/20, H04W 4/00, H04W 48/16, H04W 84/12

(54) **VERFAHREN ZUR KONNEKTIVITÄTSSTEUERUNG EINES MOBILEN ENDGERÄTS**

(71) Anmelder: RMR Retail Media Revolution GbR, 28329 Bremen (DE)
(72) Erfinder: DETTERBECK, Andreas, 20253 Hamburg (DE)
(74) Vertreter: Pavant Patentanwälte PartGmbB

(57) **Zusammenfassung**

In einem Verfahren zur Konnektivitätssteuerung eines mobilen Endgeräts ist das Endgerät wahlweise in einem ersten Konnektivitätsmodus oder einem zweiten Konnektivitätsmodus betreibbar, wobei das Endgerät in dem ersten Konnektivitätsmodus potentielle Netzwerkverbindungen eines Drahtlosnetzwerktyps zu beliebigen Netzwerkzugriffspunkten des Drahtlosnetzwerktyps sondiert, und wobei das Endgerät in dem zweiten Konnektivitätsmodus potentielle Netzwerkverbindungen des Drahtlosnetzwerktyps ausschließlich zu vorbestimmten Netzwerkzugriffspunkten des Drahtlosnetzwerktyps sondiert. Die vorbestimmten Netzwerkzugriffspunkte werden von einer Beschaffungsdatenapplikation des Endgeräts vorgegeben, wobei der zweite Konnektivitätsmodus in Abhängigkeit einer von der Beschaffungsdatenapplikation erfassten ersten Nutzerfreigabe freigeschaltet wird.

## Beschreibung

Die vorliegende Offenbarung betrifft Verfahren zur Konnektivitätssteuerung von mobilen Endgeräten.

Moderne mobile Endgeräte, wie z.B. Smartphones und Tablets, sind praktisch immer mit einer Vielzahl von Kommunikationsschnittstellen ausgerüstet. Diese sind dazu vorgesehen, das Endgerät situativ mit einer Vielzahl von unterschiedlichen Netzwerken verbinden zu können, wobei jeder Netzwerktyp spezifische Vor- und Nachteile aufweist. Beispielsweise kann das Endgerät eine Drahtlosnetzwerkschnittstelle aufweisen, um das Endgerät mit einem lokalen Drahtlosnetzwerk zu verbinden. Das lokale Netzwerk ist im Gegensatz zu einem zellularen Netzwerk oftmals bevorzugt, da es einen unbegrenzt und häufig kostenlosen Datenaustausch mit höherer Übertragungsgeschwindigkeit ermöglicht. Nachteilig ist jedoch die häufig hohe Anzahl von verfügbaren Lokalnetzwerken in der Umgebung des Endgeräts. Die automatische oder manuelle Sondierung der potentiellen Netzwerkverbindungen an dem Endgerät ist dementsprechend umfangreich und der Energieverbrauch des Endgeräts kann spürbar erhöht sein. Darüber hinaus wird durch das Sondieren aufgrund der automatischen Übermittlung bzw. Bekanntgabe von persönlichen Gerätedaten, wie z.B. der MAC-(Media-Access-Control)-Adresse, ein Tracking des Endgeräts durch Dritte ermöglicht, das unter Datenschutzaspekten unzulässig sein kann und einer nachhaltigen Ressourcennutzung entgegensteht.

Um eine nachteilige und insbesondere automatische Sondierung der Vielzahl von möglichen Netzwerkverbindungen zu unterbinden, besteht eine bekannte Maßnahme zur Konnektivitätssteuerung darin, die betreffende Netzwerkschnittstelle oder die Sondierung nach potentiellen Netzwerkverbindungen an dem Endgerät zu deaktivieren. Dem Endgerät bleibt auf diese Weise eine Anbindung an ggf. nützliche oder gewünschte Netzwerke allerdings verwehrt. Alternativ können ggf. benötigten Daten über andere Netzwerkverbindungen übertragen werden, die jedoch kostenpflichtig sein können oder nur eine langsamere Übertragungsgeschwindigkeit oder instabile Verbindungsqualität bieten.

Es ist eine Aufgabe der Erfindung, die Konnektivitätssteuerung von mobilen Endgeräten zu verbessern, insbesondere um den Sondierungsaufwand für potentielle Netzwerkverbindungen zu reduzieren, wobei eine gewünschte oder benötigte Datenübertragung dennoch ermöglicht werden kann.

Die Aufgabe wird gelöst durch die Gegenstände der unabhängigen Ansprüche.

Gemäß einem ersten Aspekt der Offenbarung wird ein Verfahren zur Konnektivitätssteuerung eines mobilen Endgeräts angegeben, das wahlweise in einem ersten Konnektivitätsmodus oder einem zweiten Konnektivitätsmodus betreibbar ist. In dem ersten Konnektivitätsmodus sondiert das Endgerät potentielle Netzwerkverbindungen eines Drahtlosnetzwerktyps zu beliebigen Netzwerkzugriffspunkten des Drahtlosnetzwerktyps. In dem zweiten Konnektivitätsmodus sondiert das Endgerät potentielle Netzwerkverbindungen des Drahtlosnetzwerktyps hingegen ausschließlich zu vorbestimmten Netzwerkzugriffspunkten des Drahtlosnetzwerktyps. Die vorbestimmten Netzwerkzugriffspunkte werden von einer Applikation, insbesondere Beschaffungsdatenapplikation, des Endgeräts vorgegeben, wobei der zweite Konnektivitätsmodus in Abhängigkeit einer von der Applikation erfassten ersten Nutzerfreigabe freigeschaltet wird.

Ein Aspekt der Lösung besteht darin, die Sondierung zu Netzwerkzugriffspunkten des Drahtlosnetzwerktyps in dem zweiten Konnektivitätsmodus auf vorbestimmte Netzwerkzugriffspunkte des Drahtlosnetzwerktyps zu beschränken. Der Sondierungsaufwand kann auf diese Weise im Vergleich zu dem ersten Konnektivitätsmodus erheblich gesenkt werden, insbesondere hinsichtlich des sondierungsrelevanten Energieverbrauchs des Endgeräts. Außerdem werden die unkontrollierte Preisgabe individueller Geräteinformationen an Dritte und eine hierauf aufbauende Verfolgbarkeit des Endgeräts vermieden. Gleichzeitig können in dem zweiten Konnektivitätsmodus dennoch Netzwerkverbindungen zu ausgewählten bzw. vorbestimmten Netzwerkzugriffspunkten ermöglicht werden. Die betreffenden Netzwerkverbindungen können insbesondere automatisch sondiert und/oder hergestellt werden.

Der zweite Konnektivitätsmodus besitzt den weiteren Vorteil, dass die vorbestimmten Netzwerkzugriffspunkte von dem Nutzer nicht manuell eingestellt oder benannt werden müssen, sondern insbesondere von einer Beschaffungsdatenapplikation des Endgeräts bereitgestellt werden. Die Beschaffungsdatenapplikation kann allgemein zur Beschaffung von Produkten oder Dienstleistungen vorgesehen sein, für die der Nutzer des Endgeräts Informationen erhalten möchte. Das Endgerät kann in dem zweiten Konnektivitätsmodus hierzu vorteilhaft Netzwerkverbindungen zu solchen Netzwerkpunkten sondieren, über die z.B. entsprechende Produktinformationen in der Beschaffungsdatenapplikation zur Verfügung gestellt werden können. Diese Netzwerkzugriffspunkte werden von der Beschaffungsdatenapplikation vorgegeben, sodass sich der Nutzer nicht mit einzelnen Netzwerkzugriffspunkten auseinandersetzen muss. Der Nutzer behält dennoch die Kontrolle über das Sondierungsgeschehen zu den Netzwerkzugriffspunkten, indem er den zweiten Konnektivitätsmodus vorzugsweise in der Beschaffungsdatenapplikation freischaltet. Der Nutzer kann zur reduzierten Sondierung insbesondere wählen zwischen (i) der Aktivierung oder Aktivierbarkeit des zweiten Konnektivitätsmodus und (ii) einer Deaktivierung des ersten Konnektivitätsmodus, entsprechend einer Deaktivierung jeglicher Sondierung nach Netzwerkzugriffspunkten des Drahtlosnetzwerktyps.

Ausführungsformen der Erfindung sind in den Ansprüchen, der Beschreibung und den Figuren offenbart.

Nach einer Ausführungsform wird der zweite Konnektivitätsmodus an dem Endgerät aktiviert, wenn der erste Konnektivitätsmodus automatisch oder in Ansprechen auf eine Nutzereingabe deaktiviert wird. Der Wechsel zwischen dem ersten und dem zweiten Konnektivitätsmodus kann beispielsweise automatisch erfolgen, sofern der Nutzer den zweiten Konnektivitätsmodus zumindest einmal freigegeben hat und diese Freigabe z.B. in der Beschaffungsdatenapplikation dauerhaft hinterlegt ist. Auf diese Weise kann auf eine gesonderte Freigabe des zweiten Konnektivitätsmodus bei einer durch Deaktivierung des ersten Konnektivitätsmodus ausgelösten Aktivierung des zweiten Konnektivitätsmodus verzichtet werden.

Nach einer weiteren Ausführungsform sendet das Endgerät in dem ersten Konnektivitätsmodus Sondierungsanfragen und/oder Sondierungsantworten zur Herstellung von Netzwerkverbindungen des Drahtlosnetzwerktyps mit beliebigen Netzwerkzugriffspunkten des Drahtlosnetzwerktyps aus. Sondierungsanfragen und -antworten können jeweils Netzwerkparameter des aussendenden Endgeräts enthalten, um das Herstellen einer Netzwerkverbindung vorzubereiten. Eine Sondierungsantwort wird im Allgemeinen in Ansprechen auf eine von einem der beliebigen Netzwerkzugriffspunkt empfangene Sondierungsanfrage ausgesendet. Auf diese Weise können potentielle Netzwerkverbindungen zu allen Netzwerkzugriffspunkten in der Reichweite des Endgeräts sondiert werden.

In dem zweiten Konnektivitätsmodus sendet das Endgerät Sondierungsanfragen und/oder Sondierungsantworten vorzugsweise ausschließlich aus, um eine Netzwerkverbindung zu einem der vorbestimmten Netzwerkzugriffspunkte des Drahtlosnetzwerktyps herzustellen. Der Sondierungsumfang kann somit auf die vorbestimmten Netzwerkzugriffspunkte beschränkt werden, insbesondere in der Weise, dass das Endgerät in dem zweiten Konnektivitätsmodus eine Sondierungsantwort zu einem der vorbestimmten Netzwerkzugriffspunkte des Drahtlosnetzwerktyps ausschließlich in Ansprechen auf eine Sondierungsanfrage aussendet, die von diesem Netzwerkzugriffspunkt empfangen wurde. Beispielsweise kann das Endgerät nach Empfang der Sondierungsanfrage zunächst prüfen, ob der Netzwerkzugriffspunkt ausweislich eines Identifikators (z.B. des Service Set Identifier (SSID)) in den vorbestimmten Netzwerkzugriffspunkten enthalten ist und, sofern zutreffend, eine Sondierungsantwort mit Netzwerkparametern des Endgeräts an den betreffenden Netzwerkzugriffspunkt senden. Andernfalls wird keine Sondierungsantwort ausgesendet.

Für einen besonders energiesparenden Betrieb des Endgeräts kann vorgesehen sein, dass das Endgerät in dem zweiten Konnektivitätsmodus keine Sondierungsanfragen zur Herstellung von Netzwerkverbindungen mit Netzwerkzugriffspunkten des Drahtlosnetzwerktyps aussendet. Die Sondierung erfolgt somit rein passiv in der Weise, dass eine Sondierungsantwort lediglich dann ausgesendet wird, wenn an dem Endgerät zuvor eine Sondierungsanfrage von einem der vorbestimmten Netzwerkzugriffspunkte empfangen wird.

Nach einer weiteren Ausführungsform ist vorgesehen, dass in dem zweiten Konnektivitätsmodus eine Netzwerkverbindung zwischen dem Endgerät und einem der vorbestimmten Netzwerkzugriffspunkte in Abhängigkeit eines positiven Sondierungsergebnisses hergestellt wird. Beispielsweise können das Endgerät und der Netzwerkzugriffspunkt eine oder mehrere Sondierungsanfragen und -antworten austauschen, um anhand von Netzwerkparametern die erforderlichen Verbindungsvoraussetzungen zu prüfen. Hierzu kann insbesondere auch die Zugehörigkeit des Netzwerkzugriffspunkts zu den von der Beschaffungsdatenapplikation vorgegebenen Netzwerkzugriffspunkten sowie die beiderseitige technische Kompatibilität gehören, insbesondere die Unterstützung eines Netzwerkstandards des Drahtlosnetzwerktyps mit vorbestimmten Übertragungsbedingungen, wie z.B. Geschwindigkeit und/oder eine Verschlüsselung.

Die zwischen dem Endgerät und einem betreffenden Netzwerkzugriffspunkt hergestellte Netzwerkverbindung ist der Beschaffungsdatenapplikation vorzugsweise in der Weise unterworfen, dass die Datenübertragung zwischen dem betreffenden Netzwerkzugriffspunkt und dem Endgerät durch die Beschaffungsdatenapplikation gesteuert und insbesondere beschränkt wird. Die Netzwerkverbindung kann somit gezielt für die Netzwerkanbindung der Beschaffungsdatenapplikation reserviert werden, sodass eine Nutzdatenübertragung priorisiert werden kann und/oder unerwünschtes Tracking des Endgeräts unterbunden wird.

Die Beschaffungsdatenapplikation ist allgemein zur Anforderung und/oder Verarbeitung von Beschaffungsdatensätzen angepasst, die jeweils eine verfügbare Beschaffung zumindest eines Produkts bzw. einer Dienstleistung repräsentieren. Die Beschaffungsdatensätze werden vorzugsweise über die hergestellte Netzwerkverbindung empfangen. Sodann kann die Beschaffungsdatenapplikation Inhalte des Beschaffungsdatensatzes an dem Endgerät zur Anzeige bringen.

Nach einer weiteren Ausführungsform wird ein in der Beschaffungsdatenapplikation hinterlegter Anforderungsdatensatz von dem Endgerät über die hergestellte Netzwerkverbindung an einen mit dem betreffenden Netzwerkzugriffspunkt verbundenen Server gesendet. Der Anforderungsdatensatz repräsentiert hierbei eine von dem Endgerätenutzer gewünschte Beschaffung wenigstens eines Produkts oder einer Dienstleistung. Beispielsweise kann der Anforderungsdatensatz Nutzerdaten und/oder Daten über Produkte enthalten, die in der Vergangenheit beschafft wurden. Auf der Grundlage des Anforderungsdatensatzes kann auf dem Server ein Beschaffungsdatensatz erzeugt und an das Endgerät gesendet werden. Der Beschaffungsdatensatz repräsentiert eine verfügbare Beschaffung des gewünschten Produkts oder der Dienstleistung. Die Beschaffungsdatenapplikation verarbeitet den Beschaffungsdatensatz und kann dessen Inhalt zur Information des Nutzers an einer Anzeigevorrichtung des Endgeräts anzeigen. Ein betreffendes Produkt ist vorzugsweise in einem Nahbereich um das Endgerät und/oder den betreffenden Netzwerkzugriffspunkt angeordnet, sodass es von einem Nutzer zusätzlich zu den angezeigten Inhalten des Beschaffungsdatensatzes unmittelbar in Augenschein genommen und ggf. beschafft werden kann.

Der Anforderungsdatensatz kann in der Beschaffungsdatenapplikation mittels einer Anforderungsregel erzeugt werden. Als Datengrundlage können neben persönlichen Daten des Nutzers auch konkrete Beschaffungswünsche und/oder eine Beschaffungshistorie herangezogen werden. Der Nutzer kann den Umfang der Datengrundlage vorzugsweise an dem Endgerät selbst einstellen und sensible Daten von der Erzeugung von Anforderungsdatensätzen ausschließen. Gemäß der Anforderungsregel wird ein jeweiliger Anforderungsdatensatz vorzugsweise mit einem Verfahren des maschinellen Lernens erzeugt, etwa einem neuronalen Netzwerk oder dergleichen.

Nach einer weiteren Ausführungsform weist der Beschaffungsdatensatz zumindest einen der folgenden Datentypen auf: Positionsdaten, insbesondere betreffend einen Bereich einer Position und/oder möglichen Lieferung eines verfügbaren Produkts; Zeitdaten; Bild-, Video-, und/oder Audiodaten (z.B. eine statische oder dynamische Abbildung des Produkts; Spezifikationsdaten (z.B. eine Größe des Produkts, eine Farbe des Produkts oder eine Produktmenge); und/oder Lieferungsdaten (z.B. einen Preis des Produkts). Inhaltlich repräsentieren die genannten Datentypen wenigstens einen Aspekt der verfügbaren Beschaffung eines Produkts bzw. einer Dienstleistung, insbesondere angepasst an die Vorgaben des Anforderungsdatensatzes. Das betreffende Produkt kann hierbei exakt einem gemäß den Anforderungsdaten gewünschten Produkt entsprechen oder ein ähnliches Produkt sein.

Die erforderliche Auswertung des Anforderungsdatensatzes kann auf einem zentralen Server unter Rückgriff auf eine Beschaffungsdatenbank erfolgen, die aktuelle Informationen über eine Vielzahl verfügbarer Produkte und Dienstleistungen enthält. Der Beschaffungsdatensatz wird vorzugsweise unter Verwendung eines Verfahrens des maschinellen Lernens erzeugt. Im Allgemeinen kann ein Beschaffungsdatensatz verfügbare Beschaffungsmöglichkeiten von ein oder mehreren Produkten oder Dienstleistungen angeben, die in einem Nahbereich (z.B. in einem Umkreis von 5 Meter) um das Endgerät und/oder den mit dem Endgerät verbundenen Netzwerkzugriffspunkt herum verfügbar sind.

Zur Vermeidung unnötiger Netzwerktätigkeit in dem zweiten Konnektivitätsmodus kann vorgesehen sein, dass die Netzwerkverbindung zwischen dem Endgerät und dem betreffenden Netzwerkzugriffspunkt in Abhängigkeit einer zweiten Nutzerfreigabe hergestellt wird. Mit anderen Worten kann nach einem positiven Sondierungsergebnis die Herstellung der Netzwerkverbindung zur Nutzdatenübertragung (z.B. von Anforderungs- und/oder Beschaffungsdatensätzen) davon abhängig gemacht werden, dass der Nutzer die Netzwerkverbindung gesondert freigibt. Alternativ kann anstelle der zweiten Nutzerfreigabe eine automatische Herstellung der Netzwerkverbindung vorgesehen werden.

Nach einer weiteren Ausführungsform wird der zweite Konnektivitätsmodus an dem Endgerät in Abhängigkeit von zumindest einem der folgenden Datentypen des Endgeräts aktiviert: Positionsdaten; Zeitdaten; Bild-, Video, und/oder Audiodaten. Beispielsweise kann festgestellt werden, dass sich das Endgerät in einem Nahbereich zu einem der vorbestimmten Netzwerkzugriffspunkte befindet und deswegen eine Sondierung zu diesem Netzwerkzugriffspunkt sinnvoll ist. Außerhalb eines solchen Nahbereichs kann die Sondierung nach Netzwerkzugriffspunkten des Drahtlosnetzwerktyps deaktiviert sein. Eine Aktivierung des zweiten Konnektivitätsmodus kann alternativ oder zusätzlich auf vordefinierte Zeiten beschränkt werden. Ferner ist es denkbar, den zweiten Konnektivitätsmodus z.B. durch eine Spracheingabe des Nutzers an dem Endgerät und/oder Bilddaten eines Produkts zu aktivieren. Die Bilddaten können insbesondere durch eine Kamera des Endgeräts aufgenommen und an die Beschaffungsdatenapplikation übermittelt werden, um den zweiten Konnektivitätsmodus zu aktivieren und über die dann ggf. hergestellte Netzwerkverbindung einen Anforderungsdatensatz mit den Bilddaten an einen zentralen Server zu senden. Dort kann anhand der Bilddaten ein Beschaffungsdatensatz zu dem in den Bilddaten abgebildeten Produkt erzeugt und über die Netzwerkverbindung an das Endgerät gesendet werden.

Nach einer weiteren Ausführungsform werden die vorbestimmten Netzwerkzugriffspunkte von der Beschaffungsdatenapplikation in Abhängigkeit von zumindest einem der folgenden Datentypen des Endgeräts des Endgeräts vorgegeben: Positionsdaten; Zeitdaten; Bild-, Video-, und/oder Audiodaten. Beispielsweise können die vorbestimmten Netzwerkzugriffspunkte, die in die Sondierung einbezogen werden, auf diejenigen beschränkt werden, die sich ausweislich der aktuellen Position des Endgeräts in einem Nahbereich des Endgeräts befinden und dementsprechend detektierbar sind. Es kann auch vorgesehen sein, die in dem zweiten Konnektivitätsmodus sondierten Zugriffspunkte in Abhängigkeit von der Uhrzeit auf jene Zugriffspunkte zu beschränken, die um die jeweilige Uhrzeit erreichbar sind. Die erreichbaren Uhrzeiten der vorbestimmten Netzwerkzugriffspunkte können ebenfalls in der Beschaffungsdatenapplikation hinterlegt sein. Der Sondierungsaufwand kann auf diese Weise noch weiter reduziert werden.

Der Drahtlosnetzwerktyp ist vorzugsweise ein drahtloser lokaler Netzwerktyp, der zu einem Standard gemäß IEEE 802.11 kompatibel ist. Insbesondere können die Netzwerkzugriffspunkte jeweils Teil eines WLANs sein (Wireless Local Area Network). Es ist zu verstehen, dass die hier beschriebene Konnektivitätssteuerung auf eine Drahtlosnetzwerkschnittstelle des Endgeräts beschränkt sein kann und hiervon unabhängig weitere Drahtlosnetzwerkschnittstellen des Endgeräts aktiv sein können.

Nach einer Ausführungsform ist das Verfahren ganz oder teilweise computerimplementiert. Hierbei ist eine verteilte Ausführung der Verfahrensschritte dergestalt denkbar, dass das Verfahren unter Verwendung verschiedener Datenverarbeitungsmittel des Endgeräts und/oder eines zentralen Servers erfolgt, wie z.B. dem Prozessor, der Plattform (z.B. Betriebssystem) und/oder der Benutzerschnittstelle, die vorzugsweise graphisch ausgebildet ist.

Ein zweiter Aspekt der Offenbarung betrifft ein mobiles Endgerät aufweisend zumindest eine Netzwerkschnittstelle, die zur Herstellung von Netzwerkverbindungen des Drahtlosnetzwerktyps zu Netzwerkzugriffspunkten eines Drahtlosnetzwerktyps dient. Die Netzwerkschnittstelle kann dementsprechend auch als Drahtlosnetzwerkschnittstelle bezeichnet werden. Das Endgerät weist zusätzlich zumindest eine Steuereinrichtung auf, die dazu angepasst ist, das Endgerät mit einem Verfahren zur Konnektivitätssteuerung gemäß einer der hier beschriebenen Ausführungsformen zu betreiben.

Gemäß einem dritten Aspekt der Offenbarung wird ein Computerprogramm zur Konnektivitätssteuerung eines mobilen Endgeräts angegeben, umfassend Befehle, die bei der Ausführung durch ein Datenverarbeitungsmittel des Endgeräts dieses veranlassen, die Schritte eines Verfahrens nach einer der hier beschriebenen Ausführungsformen auszuführen.

Das Endgerät ist vorzugsweise durch ein mobiles Endgerät gebildet, z.B. ein Smartphone, Tablet, Laptop oder ein anderes kompaktes Datenendgerät. Das Endgerät ist vorzugsweise mit einer Anzeigeeinrichtung ausgestattet, die eine graphische Benutzerschnittstelle zur Steuerung des Endgeräts aufweist, beispielsweise in Form einer berührungsempfindlichen Anzeigefläche.

Wenngleich einige Aspekte des Verfahrens mit Bezug auf die Beschaffungsdatenapplikation beschrieben sind, ist zu verstehen, dass das Verfahren nicht zwingend auf diese Art der Applikation beschränkt sein muss, sondern alternativ auch andere Applikationen in entsprechender Weise verwendet werden können.

Die beschriebenen Aspekte der Offenbarung werden nachfolgend unter Bezugnahme auf die Zeichnungen rein beispielhaft beschrieben, wobei weitere vorteilhafte Merkmale und Ausführungsformen offenbart sind.

Die Figuren zeigen im Einzelnen:
- Fig. 1: ein Blockschaltbild zur Illustrierung von Netzwerksondierungen zwischen einem Endgerät und mehreren Netzwerkzugriffspunkten;
- Fig. 2: ein schematisches Ablaufdiagramm eines Verfahrens zur Konnektivitätssteuerung eines Endgeräts gemäß einem Aspekt der Offenbarung;
- Fig. 3: eine schematische Darstellung eines Computerprogramms und/oder computerlesbaren Mediums gemäß einem Aspekt der Offenbarung;
- Fig. 4: ein Blockschaltbild zur Illustrierung einer Datenübertragung zwischen einem Endgerät und mehreren Netzwerkzugriffspunkten; und
- Fig. 5: eine Datenverarbeitungsvorrichtung zur Ausführung des Verfahrens von Fig. 2.

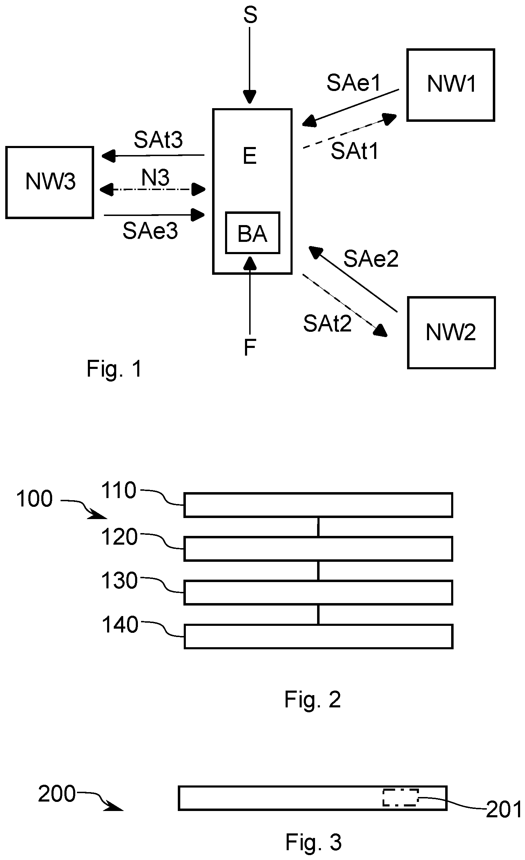

Ein Verfahren 100 zur Konnektivitätssteuerung eines Endgeräts E gemäß einem Aspekt der Offenbarung wird nachfolgend mit Bezug zu Fig. 1 und Fig. 2 beschrieben. Das Endgerät E wird durch ein Smartphone gebildet. Denkbar sind jedoch auch andere mobile Endgeräte.

In einem Schritt 110 wird das Endgerät E in einem ersten Konnektivitätsmodus betrieben. Der erste Konnektivitätsmodus zeichnet sich dadurch aus, dass das Endgerät E potentielle Drahtlosnetzwerkbindungen zu beliebigen Netzwerkzugriffspunkten des Typs IEEE 802.11 sondiert. Wie in Fig. 1 gezeigt empfängt das Endgerät E eine erste Sondierungsanfrage SAe1 von einem ersten Netzwerkzugriffspunkt NW1, eine zweite Sondierungsanfrage SAe2 von einem zweiten Netzwerkzugriffspunkt NW2 sowie eine dritte Sondierungsanfrage SAe3 von einem dritten Netzwerkzugriffspunkt NW3. Jede der Sondierungsanfragen SAe1, SAe2, SAe3 wird von dem Endgerät E ausgewertet und mit einer jeweiligen Sondierungsantwort beantwortet, nämlich einer ersten Sondierungsantwort SAt1 auf die erste Sondierungsanfrage SAe1, einer zweiten Sondierungsantwort SAt2 auf die zweite Sondierungsanfrage SAe2 sowie einer dritten Sondierungsantwort SAt3 auf die dritte Sondierungsanfrage SAe3. Die Sondierungsanfragen SAe1, SAe2, SAe3 und die Sondierungsantworten SAt1, SAt2, SAt3 enthalten jeweils Netzwerkparameter der sendenden Einheit, um die Möglichkeit einer Netzwerkverbindung zu prüfen und dessen Herstellung vorzubereiten. Zur vollständigen Prüfung der gegenseitigen Netzwerkkompatibilität und der Bereitschaft zur Herstellung einer jeweiligen Netzwerkverbindung können weitere Sondierungsnachrichten zwischen den Netzwerkzugriffspunkten NW1, NW2, NW3 und dem Endgerät E ausgetauscht werden (nicht gezeigt).

Wenn anhand der ausgetauschten Netzwerkparameter eine beiderseitige Verbindungsbereitschaft mit einer vereinbarten Netzwerkkonfiguration festgestellt wird, wird eine jeweilige Netzwerkverbindung zwischen dem Endgerät E und einem oder mehreren der Netzwerkzugriffspunkte NW1, NW2 oder NW3 hergestellt. Der Sondierungsaufwand im Zusammenhang mit der Auswertung der empfangenen Sondierungsanfragen und der gesendeten Sondierungsantworten ist aufgrund der mehreren Netzwerkzugriffspunkte NW1, NW2, NW3 und ggf. weiteren Netzwerkzugriffspunkten hoch.

Zur Reduktion des Sondierungsaufwands wird das Endgerät E wahlweise in einem zweiten Konnektivitätsmodus betrieben. Vor einer erstmaligen Aktivierung des zweiten Konnektivitätsmodus wird dieser durch eine Nutzerfreigabe F freigeschaltet. Die Nutzerfreigabe F wird von einem nicht gezeigten Nutzer an dem Endgerät E eingegeben, wobei die Nutzerfreigabe F insbesondere von einer Beschaffungsdatenapplikation BA des Endgeräts E erfasst und gespeichert wird (Schritt 120). Die Beschaffungsdatenapplikation BA dient allgemein zur Beschaffung von Produkten und Dienstleistungen. Sie stellt somit originär keine Netzwerkapplikation einer Systemsteuerung des Endgeräts E dar. Sie bietet über den zweiten Konnektivitätsmodus jedoch eine Zusatzfunktion, um bei reduziertem Sondierungsaufwand ausgewählte Netzwerkverbindungen zur Nutzung der Beschaffungsdatenapplikation BA zu ermöglichen, wie nachfolgend weiter beschrieben wird.

Der Wechsel zwischen dem ersten und dem zweiten Konnektivitätsmodus findet insbesondere wie folgt statt. Der Nutzer gibt an dem Endgerät E einen Steuerungsbefehl S ein, um den ersten Konnektivitätsmodus zu deaktivieren. In Ansprechen auf die Deaktivierung wird automatisch der zweite Konnektivitätsmodus aktiviert, wobei das Endgerät E sodann in dem zweiten Konnektivitätsmodus betrieben wird (Schritt 130). In dem zweiten Konnektivitätsmodus empfängt das Endgerät E weitere Sondierungsanfragen SAe1, SAe2, SAe3, die in regelmäßigen zeitlichen Abständen von den Netzwerkzugriffspunkten NW1, NW2, NW3 ausgesendet werden. Das Endgerät E beantwortet jedoch ausschließlich die Sondierungsanfrage SAe3 des Netzwerkzugriffspunkts NW3. Der Sondierungsumfang wird hierbei in der Weise beschränkt, dass der Netzwerkzugriffspunkt NW3 von der Beschaffungsdatenapplikation BA als vorbestimmter Netzwerkzugriffspunkt definiert wird. Die Netzwerkzugriffspunkte NW2, NW3 sind hingegen keine vorbestimmten Netzwerkzugriffspunkte. Sie sind bezüglich der Sondierung nicht privilegiert, sondern werden in dem zweiten Konnektivitätsmodus von vornherein von der Sondierung ausgegrenzt.

Die Beschaffungsdatenapplikation BA nimmt eine Auswahl aus der Menge aller Netzwerkzugriffspunkte NW1, NW2, NW3 vor und beschränkt diese auf solche, die auch in dem zweiten Konnektivitätsmodus angebunden werden sollen. In Fig. 2 ist dies der dritte Netzwerkzugriffspunkt NW3. Das Endgerät E sendet folglich die Sondierungsantwort SAt3 an den dritten Netzwerkzugriffspunkt NW3, um nachfolgend bei einem positiven Sondierungsergebnis eine Netzwerkverbindung N3 zwischen dem Endgerät E und dem Netzwerkzugriffspunkt NW3 herzustellen (Schritt 140). Die Sondierungsanfragen SAe1 und SAe2 werden hingegen nicht beantwortet, d.h. in dem zweiten Konnektivitätsmodus erzeugt das Endgerät E die Sondierungsantworten SAt1 und SAt2 nicht und sendet diese folglich auch nicht aus. Der Sondierungsaufwand bezüglich der Netzwerkzugriffspunkte NW1 und NW2 beschränkt sich auf den Empfang der Sondierungsanfragen SAe1, SA2 und die Feststellung, dass die Netzwerkzugriffspunkte NW1, NW2 nicht in den durch die Beschaffungsdatenapplikation BA vorbestimmten Zugriffspunkten enthalten sind. Der Sondierungsaufwand ist dementsprechend reduziert.

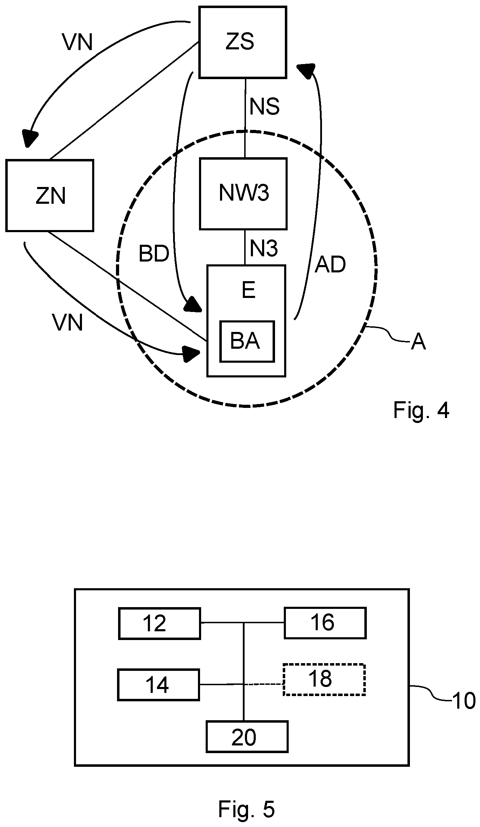

Weitere Aspekte des Verfahrens 100 von Fig. 2 und zu dessen Erweiterung sind in dem Schema von Fig. 4 gezeigt, das nachfolgend beschrieben wird.

Der Netzwerkstatus des Endgeräts E stellt sich in Fig. 4 wie folgt dar. Das Endgerät E befindet sich in dem zweiten Konnektivitätsmodus und es wurde bereits eine Netzwerkverbindung N3 zu dem Netzwerkzugriffspunkt NW3 hergestellt. Das Endgerät E befindet sich örtlich in einem schematisch dargestellten Nahbereich A um den Netzwerkzugriffspunkt NW3. Der Netzwerkzugriffspunkt NW3 ist zusätzlich zu dem Endgerät E mit einem zentralen Server ZS verbunden, der sich außerhalb des Nahbereichs A befindet und z.B. über eine kabelgebundene Netzwerkverbindung NS mit dem Netzwerkzugriffspunkt NW3 verbunden ist.

Der Server ZS ist außerdem mit einem zellularen Netzwerkzugriffspunkt ZN verbunden, der seinerseits zumindest zeitweise über eine zellulare Netzwerkverbindung mit dem Endgerät E verbunden ist, wobei weitere, nicht gezeigte Netzwerkkomponenten zwischengeschaltet sein können. Der Server ZS dient als übergeordnete Steuerungsinstanz für die Beschaffungsdatenapplikation BA. Insbesondere sendet der Server ZS einen Netzwerkdatensatz VN über den Netzwerkzugriffspunkt ZN an das Endgerät E, um der Beschaffungsdatenapplikation BA die vorbestimmten Netzwerkzugriffspunkte mitzuteilen, die in dem zweiten Konnektivitätsmodus sondiert werden sollen. Der Netzwerkdatensatz VN wird in der Beschaffungsdatenapplikation BA hinterlegt und vorzugsweise in regelmäßigen Abständen aktualisiert, indem ein neuer Netzwerkdatensatz VN von dem Server ZS übermittelt wird und in der Beschaffungsdatenapplikation BA den bisherigen Netzwerkdatensatz VN ersetzt. Der Netzwerkdatensatz VN kann zusätzlich zu den Identifikationskennungen (z.B. SSIDs) der vorbestimmten Netzwerkzugriffspunkte weitere zugeordnete Daten enthalten, wie z.B. die Position der Netzwerkzugriffspunkte und Betriebszeiten, zu denen die Netzwerkzugriffspunkte erreichbar sind. Der zweiten Konnektivitätsmodus kann in Abhängigkeit der zusätzlichen Daten automatisch aktiviert oder deaktiviert werden.

In Ansprechen auf die hergestellte Netzwerkverbindung N3 erzeugt die Beschaffungsdatenapplikation BA einen Anforderungsdatensatz AD und sendet diesen von dem Endgerät E über den Netzwerkzugriffspunkt N3 an den Server ZS. Der Anforderungsdatensatz AD enthält Daten des Nutzers, die mit einer gewünschten Beschaffung von Produkten zusammenhängen, z.B. in Form von Bilddaten eines in dem Nahbereich A mittels des Endgeräts E gescannten zweidimensionalen Codes und/oder Positionsdaten des Endgeräts. Auf der Grundlage des Anforderungsdatensatzes AD und einer nicht näher gezeigten Beschaffungsdatenbank wird auf dem Server ZS ein Beschaffungsdatensatz BD erzeugt, der Informationen zu einer verfügbaren Beschaffung wenigstens eines Produkts in dem Nahbereich A enthält. Beispielsweise kann der Beschaffungsdatensatz BD eine Abbildung eines Produkts enthalten, das in dem Nahbereich verfügbar ist. Zusätzlich kann der Beschaffungsdatensatz BD Spezifikationsdaten des Produkts angeben, die an dem Produkt selbst nicht ersichtlich sind oder gegenüber den an dem Produkt angebrachten Informationen abweichen.

Der Beschaffungsdatensatz BD wird von dem Server ZS über den Netzwerkzugriffspunkt NW3 an das Endgerät E gesendet und von der Beschaffungsdatenapplikation BA ausgewertet. Sodann werden dem Nutzer an dem Endgerät E Inhalte des Beschaffungsdatensatzes BD angezeigt, um den Nutzer über die verfügbaren Beschaffungsmöglichkeiten zu informieren und die vor Ort erhältlichen Informationen zu ergänzen. Für den Fall, dass in dem Nahbereich A keine Produkte gemäß des Anforderungsdatensatzes AD verfügbar sind, kann dies dem Nutzer über den Beschaffungsdatensatz BD mitgeteilt werden. Optional kann auf verfügbare Produkte außerhalb des Nahbereichs A hingewiesen werden, sodass der Nutzer unmittelbar alternative Beschaffungsmöglichkeiten erhält.

Fig. 3 zeigt eine schematische Darstellung eines Computerprogramms und/oder computerlesbaren Mediums 200 gemäß einem Aspekt der Offenbarung. Das Computerprogramm und/oder computerlesbare Medium 200 umfasst Befehle 201, die bei der Ausführung des Programms bzw. der Befehle 201 durch eine Datenverarbeitungsvorrichtung 10 diese veranlassen, das Verfahren von Fig. 2 und/oder zumindest einige Schritte dieses Verfahrens sowie optionale weitere Schritte des Verfahrens von Fig. 4 durchzuführen. Die Befehle 201 können als ein Programmcode in einem beliebigen Code beziehungsweise in einer beliebigen Sprache vorliegen. Das Computerprogramm und/oder computerlesbare Medium 200 kann ein beliebiges digitales Datenspeichergerät sein oder umfassen, wie zum Beispiel einen USB-Stick, eine Festplatte, eine CD-ROM, eine SD-Karte oder eine SSD-Karte. Das Computerprogramm muss nicht zwingend auf einem solchen computerlesbarem Speichermedium gespeichert sein, sondern kann auch über das Internet oder anderweitig abrufbar sein.

Die in Fig. 5 schematisch dargestellte Datenverarbeitungsvorrichtung 10 ist zur Ausführung des Computerprogramms und/oder computerlesbaren Mediums 200 angepasst. Die Datenverarbeitungsvorrichtung 10 kann insbesondere das Endgerät E bilden und umfasst als Hardwarekomponenten zumindest einen Prozessor 12, einen nicht flüchtigen Speicher 14 (z.B. eine SD-Karte) sowie einen Arbeitsspeicher 16 (z.B. einen Hauptspeicher, RAM), vgl. Fig. 5. Das Computerprogramm und/oder computerlesbare Medium 200 kann dauerhaft in dem nicht flüchtigen Speicher 14 gespeichert sein und zur Ausführung in den Arbeitsspeicher 16 geladen werden. Zusätzlich weist die Datenverarbeitungsvorrichtung 10 eine Drahtlosnetzwerkschnittstelle 20 sowie optional eine elektronische Nutzerschnittstelle 18 auf. Die Nutzerschnittstelle 18 dient zur Eingabe von Freigabe- und anderen Steuerungsbefehlen in das Endgerät E sowie zur Anzeige von Informationen, insbesondere eines Beschaffungsdatensatzes BD. Die Drahtlosnetzwerkschnittstelle 20 dient zur Herstellung von Netzwerkverbindungen (z.B. der Netzwerkverbindung N3) sowie zur Aussendung von Sondierungsanfragen und Sondierungsantworten im Vorfeld zur Herstellung einer Netzwerkverbindung.

### BEZUGSZEICHENLISTE

- 10: Datenverarbeitungsvorrichtung
- 12: Prozessor
- 14: Nicht flüchtiger Speicher
- 16: Arbeitsspeicher
- 18: Elektronische Nutzerschnittstelle
- 20: Drahtlosnetzwerkschnittstelle
- 100: Verfahren
- 110: Betreiben in dem ersten Konnektivitätsmodus
- 120: Freigabebefehl empfangen
- 130: Betreiben in dem zweiten Konnektivitätsmodus
- 140: Netzwerkverbindung herstellen
- 200: Computerprogramm und/oder computerlesbares Medium
- 201: Befehle
- A: Nahbereich
- AD: Anforderungsdatensatz
- BA: Beschaffungsdatenapplikation
- BD: Beschaffungsdatensatz
- E: Endgerät
- F: Freigabebefehl
- S: Steuerungsbefehl
- N3: Netzwerkverbindung
- NS: Netzwerkverbindung
- NW1: Erster Netzwerkzugriffspunkt
- NW2: Zweiter Netzwerkzugriffspunkt
- NW3: Dritter Netzwerkzugriffspunkt
- SAe1: Erste Sondierungsanfrage
- SAe2: Zweite Sondierungsanfrage
- SAe3: Dritte Sondierungsanfrage
- SAt1: Erste Sondierungsantwort
- SAt2: Zweite Sondierungsantwort
- SAt3: Dritte Sondierungsantwort
- VN: Netzwerkdatensatz
- ZN: Zellulares Netzwerk
- ZS: Zentraler Server

## Patentansprüche

1. Verfahren zur Konnektivitätssteuerung eines mobilen Endgeräts, wobei das Endgerät (E) wahlweise in einem ersten Konnektivitätsmodus oder einem zweiten Konnektivitätsmodus betreibbar ist,
wobei das Endgerät (E) in dem ersten Konnektivitätsmodus potentielle Netzwerkverbindungen eines Drahtlosnetzwerktyps zu beliebigen Netzwerkzugriffspunkten (NW1, NW2, NW3) des Drahtlosnetzwerktyps sondiert,
wobei das Endgerät (E) in dem zweiten Konnektivitätsmodus potentielle Netzwerkverbindungen (N3) des Drahtlosnetzwerktyps ausschließlich zu vorbestimmten Netzwerkzugriffspunkten (NW3, VN) des Drahtlosnetzwerktyps sondiert,
wobei die vorbestimmten Netzwerkzugriffspunkte (NW3, VN) von einer Applikation, insbesondere Beschaffungsdatenapplikation (BA), des Endgeräts (E) vorgegeben werden, und wobei der zweite Konnektivitätsmodus in Abhängigkeit einer von der Applikation (BA) erfassten ersten Nutzerfreigabe (F) freigeschaltet wird.

2. Verfahren nach Anspruch 1,
wobei an dem Endgerät (E) der zweite Konnektivitätsmodus aktiviert wird, wenn der erste Konnektivitätsmodus automatisch oder in Ansprechen auf eine Nutzereingabe (S) deaktiviert wird.

3. Verfahren nach Anspruch 1 oder 2,
wobei das Endgerät (E) in dem ersten Konnektivitätsmodus Sondierungsanfragen und/oder Sondierungsantworten (SAt1, SAt2) zur Herstellung von Netzwerkverbindungen des Drahtlosnetzwerktyps mit beliebigen Netzwerkzugriffspunkten (NW1, NW2) des Drahtlosnetzwerktyps aussendet, und
wobei das Endgerät (E) in dem zweiten Konnektivitätsmodus Sondierungsanfragen und/oder Sondierungsantworten (SAt3) zur Herstellung von Netzwerkverbindungen (N3) des Drahtlosnetzwerktyps ausschließlich für einen der vorbestimmten Netzwerkzugriffspunkte (NW3) des Drahtlosnetzwerktyps aussendet.

4. Verfahren nach zumindest einem der vorherigen Ansprüche, wobei das Endgerät (E) in dem zweiten Konnektivitätsmodus eine Sondierungsantwort (SAt3) zu einem der vorbestimmten Netzwerkzugriffspunkte (NW3) des Drahtlosnetzwerktyps ausschließlich in Ansprechen auf eine von dem betreffenden Netzwerkzugriffspunkt (NW3) empfangene Sondierungsanfrage (SAe3) aussendet, insbesondere wobei das Endgerät (E) in dem zweiten Konnektivitätsmodus keine Sondierungsanfragen zur Herstellung von Netzwerkverbindungen des Drahtlosnetzwerktyps mit Netzwerkzugriffspunkten (NW1, NW2, NW3) des Drahtlosnetzwerktyps aussendet.

5. Verfahren nach zumindest einem der vorherigen Ansprüche,
wobei in dem zweiten Konnektivitätsmodus eine Netzwerkverbindung (N3) des Drahtlosnetzwerktyps zwischen dem Endgerät (E) und einem der vorbestimmten Netzwerkzugriffspunkte (NW3) in Abhängigkeit eines positiven Sondierungsergebnisses hergestellt wird, wobei eine Datenübertragung zwischen dem betreffenden Netzwerkzugriffspunkt (NW3) und dem Endgerät (E) durch die Beschaffungsdatenapplikation (BA) gesteuert, insbesondere beschränkt wird.

6. Verfahren nach Anspruch 5,
wobei ein in der Beschaffungsdatenapplikation (BA) hinterlegter Anforderungsdatensatz (AD) von dem Endgerät (E) über die hergestellte Netzwerkverbindung (N3) an einen mit dem betreffenden Netzwerkzugriffspunkt (NW3) verbundenen Server (ZS) gesendet wird, wobei der Anforderungsdatensatz (AD) eine von einem Nutzer des Endgeräts (E) gewünschte Beschaffung wenigstens eines Produkts repräsentiert,
wobei ein auf der Grundlage des Anforderungsdatensatzes (AD) auf dem Server (ZS) erzeugter Beschaffungsdatensatz (BD) an dem Endgerät (E) empfangen und von der Beschaffungsdatenapplikation (BA) verarbeitet wird, und wobei der Beschaffungsdatensatz (BD) zumindest eine verfügbare Beschaffung des wenigstens einen Produkts repräsentiert, insbesondere in einem Nahbereich (A) um das Endgerät (E) und/oder den betreffenden Netzwerkzugriffspunkt (NW3).

7. Verfahren nach Anspruch 5 oder 6,
wobei die Netzwerkverbindung (N3) zwischen dem Endgerät (E) und dem betreffenden Netzwerkzugriffspunkt (NW3) in Abhängigkeit einer zweiten Nutzerfreigabe hergestellt wird.

8. Verfahren nach zumindest einem der vorherigen Ansprüche, wobei an dem Endgerät (E) der zweite Konnektivitätsmodus in Abhängigkeit von zumindest einer der folgenden Daten des Endgeräts (E) aktiviert wird:
- Positionsdaten;
- Zeitdaten;
- Bild-, Video, und/oder Audiodaten.

9. Verfahren nach zumindest einem der vorherigen Ansprüche, wobei die vorbestimmten Netzwerkzugriffspunkte (VN) von der Beschaffungsdatenapplikation (BA) in Abhängigkeit von zumindest einer der folgenden Daten des Endgeräts (E) vorgegeben werden:
- Positionsdaten;
- Zeitdaten;
- Bild-, Video, und/oder Audiodaten.

10. Verfahren nach zumindest einem der vorherigen Ansprüche, wobei der Drahtlosnetzwerktyp ein drahtloser lokaler Netzwerktyp ist, der zu einem Standard gemäß IEEE 802.11 kompatibel ist.

11. Mobiles Endgerät (E) aufweisend eine Netzwerkschnittstelle (20) zur Herstellung von Netzwerkverbindungen (N3) eines Drahtlosnetzwerktyps zu Netzwerkzugriffspunkten (NW3) des Drahtlosnetzwerktyps, wobei das Endgerät (E) eine Steuereinrichtung (12) aufweist, die dazu angepasst ist, das Endgerät (E) mit einem Verfahren zur Konnektivitätssteuerung gemäß einem der vorhergehenden Ansprüche zu betreiben.

12. Computerprogramm (200) zur Konnektivitätssteuerung eines mobilen Endgeräts (E), umfassend Befehle (201), die bei der Ausführung durch ein Datenverarbeitungsmittel (12) des Endgeräts (E) dieses veranlassen, die Schritte eines Verfahrens nach einem der Ansprüche 1 bis 10 auszuführen.
